# EUROPÄISCHE PATENTSCHRIFT

(11) **EP 2 552 709 B1**
(45) Veröffentlichungstag und Bekanntmachung des Hinweises auf die Patenterteilung: **18.05.2016**
(21) Anmeldenummer: 11711543.6
(22) Anmeldetag: 29.03.2011
(51) Int. Cl.: B44C 5/04

(54) **VERBUNDMATERIAL UND VERFAHREN ZU DESSEN HERSTELLUNG**
COMPOSITE MATERIAL AND PROCESS FOR PRODUCING IT
MATÉRIAU COMPOSITE ET PROCÉDÉ DE FABRICATION DE CELUI-CI

(30) Priorität: 30.03.2010 DE 102010003437
(43) Veröffentlichungstag der Anmeldung: 06.02.2013
(73) Patentinhaber: Pfleiderer Holzwerkstoffe GmbH, 92318 Neumarkt (DE)
(72) Erfinder: KLEIN, Herbert, 59757 Arnsberg (DE); VON WERDER, Hans, Kurt, 84494 Niedertaufkirchen (DE); NONNINGER, Kurt, 59469 Ense (DE)
(74) Vertreter: Von Rohr Patentanwälte Partnerschaft mbB
(86) Internationale Anmeldenummer: PCT/EP2011/054802
(87) Internationale Veröffentlichungsnummer: WO 2011/124503

(56) Entgegenhaltungen:
- WO-A2-2007/025731
- DE-A1- 19 916 546
- DE-A1-102008 008 292

## Beschreibung

### EINLEITUNG

Die vorliegende Erfindung betrifft ein Verfahren zur Herstellung eines Verbundmaterials oder eines Verbundmaterial-Vorprodukts und das nach diesem Verfahren erhältliche Material. Vorzugsweise betrifft sie ein Verfahren zur Herstellung eines verpressten, laminierten Verbundmaterials, das auf mindestens einer Seite ein mit einer mit Licht, vorzugsweise UV-Licht, härtbaren Tinte erzeugtes Druckbild aufweist, sowie das nach diesem Verfahren herstellbare verpresste, laminierte Verbundmaterial.

### STAND DER TECHNIK

Verbundmaterialien, wie sie Gegenstand der vorliegenden Erfindung darstellen, sind insbesondere mit einer dekorativen Oberfläche versehene Schichtstoffplatten oder Vorprodukte davon, in denen die Dekorschicht fest mit der Trägerschicht verbunden ist. Letzteres wird beispielsweise erzielt durch gemeinsames Verpressen der Dekorschicht mit mindestens einer Trägerschicht, wobei mindestens eine Trägerschicht und/oder mindestens eine der die Dekorschicht bildenden Komponenten mit einem wärmehärtbaren Harz imprägniert sind. Bei Verpressen erfolgt eine Imprägnierung aller Schichten. Durch Wärmeeinwirkung beim Verpressen wird das wärmehärtbare Harz gehärtet, und es entsteht ein mehrschichtiges Verbundmaterial, das durch das gehärtete Harz integral verbunden ist.

Die Dekorschicht umfasst üblicherweise neben einer mit dem gewünschten Dekor bedruckten Schicht eine Schutzschicht und/oder eine vorzugsweise opake Zwischenschicht, die im Endprodukt zwischen Trägermaterial und dekortragender Lage befindlich ist.

Trägermaterialien sind Papiere, Vliese, aber auch starre Materialien wie Holzwerkstoffplatten, wie beispielsweise Spanplatten, MDF-Platten, Glasfasermatten, Dämmstoffplatten und Mischungen daraus. Die verpressten und ausgehärteten Verbundstoffmaterialien weisen neben dem gewünschten Dekor Oberflächen auf, die kratzfest und gegenüber thermischer Beanspruchung weitgehend unempfindlich sind. Sie finden weitverbreitet Anwendung in allen Bereichen des täglichen Lebens, in denen eine dekorative Oberfläche neben Beständigkeit gegenüber Beanspruchung aller Art wünschenswert ist. Insbesondere werden solche Verbundmaterialien eingesetzt für Arbeitsplatten in Küchen und Labors; im Möbelbau; für Einbaumöbel und andere innenarchitektonische Bauelemente, insbesondere Büroeinrichtungen, Ladenbau, allgemeinen Innenausbau von z.B. Schulen, Krankenhäusern, Sporteinrichtungen, Flughäfen und Bahnhöfen, und in Verkehrsmitteln wie beispielsweise Wohnwagen, Eisenbahnwaggons oder Schiffen.

Das dekorative Element der gattungsgemäßen Verbundwerkstoffe wird bereitgestellt durch Einfügen einer bedruckten Lage in das Verbundmaterial. Zur Verbesserung der mechanischen Stabilität wird diese häufig mit einer (transparenten) Deckschicht als äußerste Schicht des Verbundmaterials geschützt. Der Druck des dekorativen Musters erfolgt im Stand der Technik mit lösemittelhaltigen bzw. wässrigen Tinten. Die Pigmente dieser Tinten weisen nach dem Trocknen eine gute Kompatibilität mit den üblicherweise verwendeten wärmehärtbaren Harzen auf. Solche Harze sind Harze auf Melaminbasis, Harnstoffharze, Acrylat- oder Polyurethandispersionen, Epoxydharze oder wasserlösliche Tränkharze. Auf Grund dieser guten Kompatibilität lassen sich Verbundmaterialien herstellen, deren Schichten fest miteinander verbunden sind, und die auch unter harten Bedingungen keine Delaminierung zeigen.

Der Einsatz wässriger bzw. lösungsmittelhaltiger Tinten hat jedoch den Nachteil, dass die erreichbare Druckgeschwindigkeit beim Bedrucken der Dekorschicht begrenzt ist. Insbesondere kommt es häufig durch Verdunsten des Wassers oder des Lösungsmittels zu einer Aufkonzentration der Tintenpigmente und dadurch zum Verstopfen der Tintenstrahldüsen. Dadurch kommt es immer wieder zu Störungen und Unterbrechungen des Druckvorgangs, und insgesamt können hohe Druckgeschwindigkeiten nicht erreicht werden.

Eine weitere bekannte Technik ist es, füllstofffreie OverlayPapiere zu bedrucken und diese mit der bedruckten Seite auf einfarbige, mit Melaminharz imprägnierte Dekorpapiere aufzulegen und diese miteinander zu verpressen. Vorteil dieser Technik ist es, dass mit einem Druck im Rotationstiefdruckverfahren in Abhängigkeit vom Basispapier diverse Dekorfarben erzeugt werden können. Nachteilig an dieser Technik sind jedoch der erforderliche hohe zeitliche wie materielle Aufwand zur Herstellung (Gravur) der benötigten Druckwalzen und die damit einhergehenden hohen Kosten. Aus diesen Gründen sind insbesondere kleine Losgrößen nicht wirtschaftlich darstellbar.

Zur wirtschaftlichen Erzeugung konturscharfer Bilder in Kleinen Losen und fotcrealistischer Qualität wurde eine Technologie entwickelt, in der mittels Tintenstrahl-Digitaldruck Farbempfangsschichten im zu bedruckenden Material bedruckt werden. Wesentlicher Bestandteil dieser Techniken ist eine Verdichtung der Papieroberfläche. Die so verdichteten Papiere führen aber zu einer verminderten Penetrationsfähigkeit der bedruckten Substrate für z.B. Imprägnierharze, und sind sehr teuer.

Eine Möglichkeit, die mit lösungsmittelhaltigen bzw. wässrigen Tinten verbundenen Nachteile zu überwinden, wäre die Verwendung von UV-härtenden Tinten, die keine Lösungsmittel enthalten. Da hier kein Lösungsmittel verdunsten kann und keine Aufkonzentration der Tintenpigmente erfolgt, wird die Verstopfung der Tintenstrahldüsen vermieden.

Mit UV-Tinten bedruckte Substrate können jedoch nicht nach den im Stand der Technik bekannten Technologien verarbeitet werden. Die im UV-Druck erhaltene Farbschicht ist mit den bekannten Imprägnierharzen auf Melaminbasis oder anderer Basis wie oben aufgeführt nicht hinreichend kompatibel. Dadurch bildet im Schritt der Verpressung und Aushärtung der einzelnen Schichten die gedruckte Farbschicht mit dem Imprägnierharz keine oder nur eine unzureichende Haftung aus.

Dadurch kommt es bei mechanischer oder thermischer Belastung leicht zu einer Delaminierung an der die Farbschicht tragenden Lage des Verbundmaterials. Auch durch Einwirkung von Feuchtigkeit wird die Gefahr der Delaminierung der Drucktintenschicht von der Imprägnierharzschicht erhöht. Derartige Verbundmaterialien zeigen daher eine unzureichende Feuchtebeständigkeit.

Darüber hinaus können übliche pigmentierte Dekorpapiere nicht in zufriedenstellender Weise mit UV-härtenden Tinten bedruckt werden, da die Tintenanteile, die vom Papier aufgesogen werden, im Lichtschatten der Pigmente liegen und somit nicht durch Bestrahlung mit Licht gehärtet werden. Zwar kann dieses Problem durch Aufbringen einer Farbempfangsschicht, die das Absinken der UV-Tinte verringert, auf übliche Dekorpapiere vermieden werden. Bedruckt man solche Substrate mit lichthärtenden Tinten, tritt aber das bereits geschilderte Problem der unzureichenden Kompatibilität mit den üblichen Imprägnierharzen auf.

Im Licht der oben beschriebenen, im Stand der Technik bekannten Verfahren und der damit verbundenen Schwierigkeit ist es eine der vorliegenden Erfindung zugrundeliegende Aufgabe, ein Verfahren bereitzustellen, mit dem Verbundmaterialien oder Verbundmaterial-Vorprodukte hergestellt werden können, die konturscharfe Druckbilder aufweisen und die bei mechanischer und thermischer Belastung sowie gegenüber Feuchtigkeitseinwirkung eine gute Delaminierungsstabilität zeigen. Darüber hinaus soll das Verfahren mit hohen Druckgeschwindigkeiten durchgeführt werden können, wodurch das Verfahren kosteneffizient arbeitet.

WO 2007/025731 offenbart ein Verfahren zur Herstellung eines Verbundmaterials oder eines Vorprodukts davon, das folgende Schritte umfasst:
(i) Bedrucken (p.2, I.22) eines Trägermaterials (A1) mit einer durch Bestrahlung mit Licht härtbaren Tinte (D), wobei das Trägermaterial (A1)
   (a) mit einem härtbaren, nach dem Härten transparenten und lichtstabilen Harz (B) imprägnierbar ist, und
(ii) Härten der Tinte (D) durch Bestrahlung mit Licht;
(iii) Imprägnieren (p.4, I.5) des so behandelten Trägermaterials (A1) mit einem härtbaren, nach dem Härten transparenten und lichtstabilen Harz (B) und gegebenenfalls Kombinieren des Trägermaterials (A1) mit mindestens einem weiteren Trägermaterial (A2) (p.4, I.1-3); und
(iv) Härten des Harzes (B) gleichzeitig mit oder nach Schritt (iii).

Das Dokument sagt nichts über die Lichtdurchlässigkeit des Trägermaterials aus.

### ZUSAMMENFASSUNG

Die vorliegende Erfindung wird nachfolgend genauer hinsichtlich allgemeiner und bevorzugter Ausführungsformen beschrieben sowie anhand von Beispielen und Vergleichsbeispielen erläutert. Angaben in % beziehen sich auf Gew.-% soweit nicht anderes angegeben, wobei "*atro Papier"* die Bedeutung *"bezogen auf das Papiergewicht im trockenen Zustand"* hat, d.h. ohne Papierrestfeuchte.

Die oben dargelegte Aufgabe konnte durch die vorliegende Erfindung gelöst werden. Genauer wird die der Erfindung zugrunde liegende Aufgabe gelöst durch ein Verfahren zur Herstellung eines Verbundmaterials oder Verbundmaterial-Vorprodukts (nachfolgend vereinfachend als "*Verbundmaterial*" bezeichnet; gemeint ist jedoch beides, wenn nicht explizit etwas anders angegeben ist oder sich eine andere Bedeutung logisch zwingend aus dem Zusammenhang ergibt), das folgende Schritte umfasst:
(i) Bedrucken eines Trägermaterial (A1) mit einer durch Bestrahlung mit Licht härtbaren Tinte (D), wobei das Trägermaterial (A1)
   (a) mit einem härtbaren, nach dem Härten transparenten und lichtstabilen Harz (B) imprägnierbar ist, und
   (b) für Licht im Wellenlängenbereich von 200-500 nm eine auf die Gesamtdicke bezogene Durchlässigkeit von 10-95 %, vorzugsweise 20-90 %, weiter bevorzugt 30-80 % aufweist;
(ii) Härten der Tinte (D) durch Bestrahlung mit Licht;
(iii) Imprägnieren des so behandelten Trägermaterials (A1) mit einem härtbaren, nach dem Härten transparenten und lichtstabilen Harz (B) und Kombinieren des Trägermaterials (A1) mit mindestens einem weiteren Trägermaterial (A2); und
(iv) Härten des härtbaren Harzes (B) gleichzeitig mit oder nach Schritt (iii);

Bevorzugte Ausführungsformen dieses Verfahrens sind wie in den anliegenden abhängigen Verfahrensansprüchen definiert.

Des Weiteren wird die der Erfindung zugrunde liegende Aufgabe gelöst durch ein Verbundmaterial, das nach dem erfindungsgemäßen Verfahren erhältlich ist.

### DETAILLIERTE BESCHREIBUNG

Nach dem erfindungsgemäßen Verfahren wird zunächst ein Trägermaterial (A1) mit einer durch Bestrahlung mit Licht härtbaren Tinte (D) bedruckt. Insbesondere zur Herstellung von Drucken nach digitalen Vorlagen kommt hierbei ein Tintenstrahldruckverfahren zum Einsatz.

### Trägermaterial (A1)

Das erfindungsgemäß verwendete Trägermaterial (A1) ist mit einem härtbaren Harz (B) imprägnierbar und weist für Licht im Wellenlängenbereich von 200-500 nm, vorzugsweise 240-420 nm, und weiter bevorzugt 250-350 nm, eine auf die Gesamtdicke des Trägermaterials (A1) bezogene Durchlässigkeit von 10-95% auf. Vorzugsweise ist diese Durchlässigkeit 20-90%, weiter bevorzugt 30-80%. Hierdurch wird gewährleistet, dass das zur Härtung der Tinte (D) verwendete Licht hinreichend tief in das Trägermaterial (A1) eindringen kann, wodurch auch die Teile der Drucktinte gehärtet werden, die am tiefsten in das Trägermaterial (A1) eingedrungen sind.

Bevorzugte Materialien für das Trägermaterial (A1) sind Papiere und Vliese. Unter Vliesen sind Glasfaservliese, und insbesondere Vliese aus Borsilikatglas, als bevorzugte Ausführungsformen zu nennen. Geeignete Papiere sind insbesondere solche, die keine Füllstoffe enthalten, oder nur solche Füllstoffe, die für Licht in den oben genannten Wellenlängenbereichen durchlässig sind. Unabhängig vom Vorhandensein solcher Füllstoffe sind Papiere weiter bevorzugt, die mindestens 50 Gew.-% Zellulosefasern umfassen, vorzugsweise mindestens 70 Gew.-%, und weiter bevorzugt mindestens 90 Gew.-%.

Besonders geeignet sind Papiere, die ein Flächengewicht von 10-200 g/m² aufweisen. Weiter bevorzugte Flächengewichte sind 15-130 g/m², noch weiter bevorzugt 20-100 g/m².

### Tinte (D)

Als zum Drucken des Trägermaterials (A1) verwendbare Tinten (D) sind vorzugsweise solche zu nennen, die durch Bestrahlen mit Licht im Wellenlängenbereich von 200-500 nm gehärtet werden können. Eine hohe Quantenausbeute ist bevorzugt, da in diesem Fall der zum Härten benötigte Energieaufwand reduziert werden kann, und die zum Härten eingesetzten Vorrichtungen entsprechend kleiner dimensioniert werden können. Bevorzugt ist eine Härtbarkeit des Harzes mit Licht einer Wellenlänge von 240-420 nm, weiter bevorzugt 250-350 nm

Geeignete Tinten, die in den genannten Wellenlängenbereichen gehärtet werden können, sind insbesondere Tinten auf Acrylatbasis, Tinten auf Polyesterbasis, Tinten auf Epoxydbasis und Tinten auf Epoxyacrylatbasis. Ein Beispiel für eine solche im UV-Bereich härtbare Tinte ist *Rho Roll Ink* (Durst Phototechnik AG, IT-39042 Brixen), eine pigmentierte Tinte auf Acrylatbasis.

Derartige Tinten sind speziell für den Einsatz im Tintenstrahldruck geeignet. Das Bedrucken des Trägermaterials (A1) erfolgt erfindungsgemäß vorzugsweise mittels Tintenstrahldruck auf Basis digitaler Bilddatensätze.

### Imprägnieren mit Harz (B)

Das mit der Tinte (D) bedruckte Trägermaterial (A1) wird nach dem Härten der Tinte durch Bestrahlen mit Licht mit einem härtbaren Harz (B) imprägniert. Dieses erfolgt durch direktes Imprägnieren des Trägermaterials mit dem härtbaren Harz, oder durch Übereinanderlegen des Trägermaterials (A1) mit mindestens einem weiteren Trägermaterial (A2), das mit einem härtbaren Harz (B) imprägniert ist, und Verpressen dieser mindestens zwei Lagen in einer solchen Weise, dass eine Imprägnierung des Trägermaterials (A1) mit dem Harz (B) aus dem Trägermaterial (A2) erfolgt. Erfindungsgemäß ebenso geeignet ist ein Verfahren, worin das Trägermaterial (A1) direkt mit dem Harz (B) imprägniert wird, und zusätzlich mit mindestens einem weiteren Harz imprägnierten Trägermaterial (A2) in der oben beschriebenen Weise kombiniert wird.

Das mindestens eine Trägermaterial (A2) kann ausgewählt werden aus einer Vielzahl verschiedener Materialien, und bevorzugt sind Overlaypapiere, Dekorpapiere, Natronkraftpapiere, Vliese auf Basis von Kunst- oder Naturfasern, Dämmstoffplatten, Span- oder Pressholzplatten, Glasfasermaterialien und Mischprodukte daraus.

Gemäß einer besonders bevorzugten Ausführungsform wird das bedruckte Trägermaterial (A1) auf einer Seite mit einem harzgetränkten Overlaypapier kombiniert. Diese Seite bildet später die äußere Oberfläche des erfindungsgemäßen Verbundmaterials, d.h. das Overlaypapier bildet eine transparente Schutzschicht für das bedruckte Trägermaterial (A1). Vorzugsweise weist das für diesen Zweck verwendete Overlaypapier ein Flächengewicht von 10-200 g/m² auf. Darüber hinaus hat es vorzugsweise einen geringen Gehalt an opaken Füllstoffen, so dass durch das Imprägnieren mit dem härtbaren Harz (B) ein transparentes Material entsteht, das das darunter liegende bedruckte Trägermaterial (A1) gut sichtbar werden lässt.

Das Trägermaterial (A2) kann auch ein Material sein, das dem resultierenden Verbundmaterial in erster Linie Volumen und Festigkeit verleiht. In diesem Fall sind Natronkraftpapiere, Vliese, Dämmstoffplatten, Span- oder Pressholzplatten, Glasfasermaterialien und Mischprodukte daraus bevorzugt. Gemäß einer erfindungsgemäß bevorzugten Ausführungsform werden als Trägermaterial (A2) Natronkraftpapier eingesetzt, insbesondere solche mit einem Flächengewicht von 40-300 g/m², vorzugsweise 80-250 g/m², weiter bevorzugt 100-200 g/m²,

In einer alternativen Ausgestaltung ist das Trägermaterial (A2) ein Dekorpapier. Ein solches Papier ist mehr oder weniger opak uns schirmt daher das erfindungsgemäße Verbundmaterial optisch gegen die ggf. darunter befindlichen Schichten ab. Das Dekorpapier kann eine beliebige Farbe aufweisen, ist jedoch vorzugsweise weiß oder von einem hellen Farbton, so dass den darüber befindlichen Druck im Trägermaterial (A1) hervorgehoben und/oder unterstützt wird. Ebenso ist das Dekorpapier von einer einheitlichen Farbe ohne Bemusterung. Besonders bevorzugt sind solche Dekorpapiere vollständig opak und verlieren die Opazität auch nicht durch das Imprägnieren mit dem härtbaren Harz (B). Das Flächengewicht des Dekorpapiers liegt üblicherweise im Bereich von 50-150 g/m², vorzugsweise 60-120 g/m², weiter bevorzugt 75-100 g/m².

Durch Kombinieren eines solchen Dekorpapiers als Trägermaterial (A2) mit dem bedruckten Trägermaterial (A2) wird ein Verbundmaterial erhalten, bei dem das Druckbild vor dem vorzugsweise einfarbigen und homogenen opaken Hintergrund des Dekorpapiers in ästhetisch besonders ansprechender Weise hervortritt. Da das Trägermaterial (A1) aus den oben beschriebenen Gründen einen hohen Transparenzgrad aufweist, ist in den unbedruckten Bereichen unvermeidlich die unter dem Trägermaterial (A1) liegende Schicht sichtbar. Im Fall eines einfarbigen Dekorpapiers kann bewusst eine bestimmte "Hintergrundfarbe" für das Druckbild auf dem Trägermaterial (A1) eingestellt werden.

Ebenso kann ein erfindungsgemäßes Verbundmaterial auch hergestellt werden unter Verwendung von Dekorpapieren als Kernlagen. Solche Produkte lassen sich besonders bevorzugt dort einsetzen, wo der Querschnitt des Verbundmaterials eine sichtbare Kante bildet. Das Dekorpapier als Kernlage hat dann die gleiche Farbe wie der Untergrund der bedruckten Fläche des Verbundmaterials. Durch gezielte Auswahl des als Kernlage verwendeten Dekorpapiers lassen sich weitere dekorative Kanteneffekte erzielen. Die Beharzung des Dekorpapiers in einer solchen Anwendung ist vorzugsweise 50-120 % atro Papier, insbesondere 60-100 %.

In einer noch weiteren Ausführungsform können als Kernlagen Overlaypapiere verwendet werden, wodurch insgesamt transluzente Verbundmaterialien erhalten werden. Die Beharzung des Overlaypapiers beträgt hier vorzugsweise 50-250% atro Papier, insbesondere 60-200 %.

Das Flächengewicht des Dekorpapiers in diesen Ausführungsformen liegt üblicherweise im Bereich von 50-200 g/m², vorzugsweise 60-150 g/m², weiter bevorzugt 75-120 g/m², noch weiter bevorzugt 80-100 g/m².

Erfindungsgemäß kann die Kombination aus bedrucktem Trägermaterial (A1) und mindestens einem weiteren Trägermaterial (A2) gemäß bevorzugten Ausführungsformen ausgewählt werden aus der Kombinationen eines bedruckten Trägermaterials (A1) mit (a) einem Overlaypapier, (b) einem Dekorpapier, (c) einem auf einer Seite aufgebrachten Overlaypapier und auf der anderen Seite des Trägermaterials (A1) befindlichen Overlaypapier, (d) eine beliebige der Ausführungsformen (a)-(c) mit einer oder mehreren Lagen der oben beschriebenen Trägermaterialien zur Erzielung von Volumen und Festigkeit.

Des weiteren sind Verbundmaterialien in den erfindungsgemäßen Umfang eingeschlossen, die auf beiden Seiten eine Dekorschicht aus zumindest der bedruckten (und imprägnierten/gehärteten) Trägerschicht (A1) und ggf. anderen Schichten wie oben beschrieben aufweist. Diese Strukturen weisen vorzugsweise mindestens eine Kernlage als Kernimprägnat auf, z.B. eine oder mehrere Lagen aus ebenfalls imprägniertem Natronkraftpapier, Dekorpapier oder Overlaypapier, oder anderen Materialien wie bereits definiert. Die Dekorschichten können auf beiden Seiten gleich oder voneinander verschieden sein.

Mit beliebigen der oben beschriebenen Ausführungsformen lassen sich weitere Kombinationen mit zusätzlichen anderen Zwecken dienenden Lagen konstruieren, die ebenfalls in den erfindungsgemäßen Umfang eingeschlossen sind.

Das härtbare Harz (B) kann ein beliebiges Harz sein, in die Trägermaterialien (A1), (A2) und ggf. weitere Trägermaterialien des erfindungsgemäßen Verbundwerkstoffs imprägnierbar und unter Verpressen der Schichten härtbar ist. Vorzugsweise ist das härtbare Harz (B) ein warmhärtendes Harz.

Zum Imprägnieren in das Trägermaterial kann das Harz (B) unverdünnt oder in verdünnter Form vorliegen, vorzugsweise verdünnt in Form einer Suspension, Dispersion oder Lösung in einem geeigneten Medium. Besonders bevorzugt sind wässrige Tränkharzzubereitungen, in denen das Verdünnungsmedium ganz oder zum überwiegenden Teil Wasser ist. Neben Wasser können bei Bedarf mit Wasser mischbare Löslichkeits-Mischbarkeitsverbesserer verwendet werden, z.B. niedere Alkohole, Aldehyde, Ketone oder Glykole.

Da das härtbare Harz (B) in Trägermaterialien imprägniert wird, die im fertigen Verbundmaterial sichtbar sind, muss das Harz (B) nach dem Härten transparent sein, vorzugsweise farblos transparent. Zudem ist es wünschenswert, dass das gehärtete Harz (B) lichtecht ist, d.h. sich im Lauf der Zeit nicht durch Lichteinfluss verfärbt.

Besonders bevorzugte Harze (B), die die Anforderungen an Transparenz und Lichtechtheit erfüllen, können ausgewählt werden aus Aminoplastharzen, insbesondere Melaminharzen (z.B. *Kauramin*^{®} *753,* BASF AG); Melaminetherharzen (z.B. *Madurit*^{®} *SMW 818,* INEOS Melamines GmbH, DE-60386 Frankfurt/Main), Harnstoffharzen, Polyesterharzen, Acrylatdispersionen (z.B. *Plextol*^{®} *BV 595,* PolymerLatex GmbH, DE-45768 Marl), Polyurethandispersionen, Epoxidharz-Dispersionen, und Mischungen daraus.

Das erfindungsgemäße Verbundmaterial kann ferne Lagen enthalten, die im fertigen Produkt nicht sichtbar sind. Beispiele hierfür sind Kernlagen, die zur Erlangung der richtigen Dicke und Zähigkeit der Produkte dienen. Solche Lagen, sofern sie ebenso wie die sichtbaren Lagen mit einem härtbaren Harz imprägniert werden, können anstelle des Harzes (B) wie oben beschrieben auch mit einem härtbaren Harz (C) imprägniert werden, das nicht transparent, lichtstabil und/oder farbecht sein muss Ein bevorzugtes Beispiel für ein solches Harz ist die Klasse der Phenolharze.

Die vorliegende Erfindung umfasst auch Ausführungsformen, in denen unterschiedliche Trägermaterialien mit unterschiedlichen härtbaren Harzen (B) und/oder (C) imprägniert sind, so lange diese miteinander kompatibel sind, und sich zu einem Verbundmaterial mit erfindungsgemäß bevorzugten Delaminierungseigenschaften verpressen und härten lässt.

Das erfindungsgemäße Verbundmaterial wird hergestellt durch Bereitstellen eines Trägermaterials (A1), das ein durch Bedrucken mit der Tinte (D) und Aushärten mit Licht erzeugtes Druckbild aufweist, Imprägnieren dieses bedruckten Trägermaterials (A1) mit einem härtbaren Harz (B) und Härten des Harzes (B).

In der Praxis werden hierzu das bedruckte und gehärtete Trägermaterial (A1) direkt und/oder indirekt über mindestens ein weiteres Trägermaterial (A2) mit einem härtbaren Harz imprägniert und anschließend gehärtet.

Wird das bedruckte und gehärtete Trägermaterial (A1) direkt imprägniert und gehärtet, erhält man als verfahrensgemäßes Produkt ein Verbundmaterial-Vorprodukt, das in weiteren Schritten mit anderen Materialien zu einem Verbundmaterial verarbeitet werden kann.

Erfindungsgemäß bevorzugt ist es jedoch, die angestrebten Verbundmaterialien durch direktes Verpressen und Härten der miteinander zu verbindenden Schichten herzustellen. Daher ist es erfindungsgemäß bevorzugt, das bedruckte und gehärtete Trägermaterial (A1) gemeinsam mit mindestens einem weiteren Trägermaterial (A2) zu verpressen und zu härten. Hierbei kann das Trägermaterial (A1), mindestens eines der ggf. mehreren weiteren Trägermaterialien (A2) oder auch alle Trägermaterialien mit dem härtbaren Harz (B) imprägniert sein. Welche Materialien mit dem härtbaren Harz (B) imprägniert sind und die darin imprägnierte Menge des Harzes (B) sind nicht kritisch, solange durch Verpressen des Komposits aus den einzelnen Trägermaterialien ein Verbundmaterial erhalten wird, in dem alle Schichten mit dem härtbaren Harz (B) imprägniert sind und durch Härten ein fest verbundenes Verbundmaterial liefern.

Wird das bedruckte und gehärtete Trägermaterial (A1) mit einem härtbaren Harz (B) imprägniert, so ist es erfindungsgemäß bevorzugt, das Harz (B) in einer Menge von 20-500 Gew.-%, vorzugsweise 30-400 Gew.-%, weiter bevorzugt 40-350 Gew.-%, bezogen auf das Flächengewicht des Trägermaterials (A1), zu imprägnieren. Beispielsweise ist der Harzauftrag (z.B. eines Melaminharzes) bei Trägermaterialien (A1), die mit einem harzgetränkten Overlay verpresst werden, vorzugsweise 60-120% atro Papier, insbesondere 70-100 %, und bei solchen, die ohne Overlay verpresst werden, 80-180 % atro Papier, insbesondere 100-160 %.

Der Harzauftrag bei unbedruckter Deckoverlays beträgt vorzugsweise 200-500 % atro Papier, insbesondere 240-350 %, und bei Natronkraftpapieren vorzugsweise 35-120 % atro Papier, besonders bevorzugt 40-100 % atro Papier, und insbesondere 45-80 %. Die oberen Harzauftragmengen werden insbesondere in Verbindungen mit nicht imprägnierten bedruckten Substraten angewandt.

Die Restfeuchte der mit Harz imprägnierten Materialien nach Trocknung ist für alle beschriebenen Materialien und für jedes unabhängig von anderen damit zu laminierenden Materialien, im allgemeinen 4-10 % (bezogen auf das Gesamtgewicht des imprägnierten Materials), vorzugsweise 5-9 %, weiter bevorzugt 6-8 %.

Weitere besonders bevorzugte Ausführungsformen der vorliegenden Erfindung sind sogenannten Dünnlaminate, die erhalten werden durch Verpressen eines bedruckten Bogens auf einem Vulkanfiber- oder Vulkamentbogen und unter einem Overlay zu einem mit einer Produktdicke von 0,15-0,40 mm, vorzugsweise 0,2-0,35 mm, insbesondere 0,25-0,30 mm, sowie sogenannten Kompaktplatten mit einer Dicke von 1-40 mm, vorzugsweise 2-30 mm, wobei die Dicke durch die Dicke und Anzahl der als Kernimprägnat verwendeten Lagen bestimmt wird. Die Kernimprägnate sind in der Regel mit Phenolharz getränkte Natronkraftpapiere mit einem Papiergewicht 60-300g/m² bevorzugt 120-250g/m² weiter bevorzugt 140-200g/m² Diese Kompaktplatten können ein- oder beidseitig ein das bedruckte Trägermaterial (A1) enthaltendes Dekor aufweisen.

Wird das erfindungsgemäße Verfahren in einer Art und Weise durchgeführt, bei der eine Trägermateriallage durch Verpressen mit einer anderen harzgetränkten Trägermateriallage mit dem härtbaren Harz (B) imprägniert wird, muss das Verpressen so durchgeführt werden, dass eine ausreichende Imprägnierung der zuvor nicht imprägnierten Schicht nicht gewährleistet ist. Die hier zu Verfügung stehenden Parameter, insbesondere Verpressdruck und -dauer, aber auch Temperatur und die gesamte verfügbare Menge an Imprägnierharz im zu verpressenden Material, sind dem Fachmann grundsätzlich bekannt und können von ihm auf Basis seines Fachwissens in geeigneter Weise eingestellt werden. Grundlagen dieser Technologie sind beispielsweise beschrieben im Kunststoff-Handbuch (Hg.: G.W Becker, D. Braun, W. Woebcken), Bd. 10 (Duroplaste), Carl Hanser Verlag, 2. vollständig Überarbeitete Auflage 1988.

Falls das härtbare Harz (B) ein warm härtendes Harz ist, kann die Härtung durch thermische Behandlung beim Verpressen oder nach dem Verpressen und nach der Imprägnierung aller Schichten oder gleichzeitig damit durchgeführt werden. Hierzu kann während des Verpressens die Temperatur in geeigneter Weise eingestellt werden.

Vom Fachmann ohne Weiteres ersichtlich ist die zum Imprägnieren erforderliche Zeit für ein vorgegebenes System abhängig vom Verpressdruck. Je kleiner der Druck desto langsamer erfolgt die vollständige Imprägnierung. Ebenso ist dem Fachmann bekannt, dass warm härtende Harze mit zunehmender Temperatur schneller aushärten. Daher wird der Fachmann in der Praxis Bedingungen wählen, bei denen die Imprägnierung und das Härten in einem Verpressschritt durchgeführt werden können. Dazu ist es erforderlich, dass der Verpressdruck hinreichend hoch ist, so dass bei der gegebenen Temperatur die Imprägnierung abgeschlossen ist, bevor durch die voranschreitende Aushärtung die Viskosität des Harzes soweit zunimmt, dass es unter dem gegebenen Druck nicht mehr fließfähig ist. Andererseits muss die Temperatur so eingestellt werden, dass der Aushärtungsprozess bis zum Abschluss der Imprägnierung noch nicht wesentlich vorangeschritten ist, aber in einer akzeptablen Zeit abgeschlossen werden kann.

Erfindungsgemäß wird das Verfahren, bei dem Imprägnierung und Aushärtung in einem Schritt durchgeführt werden, durch Verpressen bei einem Druck von 1.000-10.000 kPa und bei einer Temperatur von 110-220°C geführt. Insbesondere die Temperatur kann auch über den zeitlichen Verlauf des Verpressschrittes variiert werden. Beispielsweise kann zur Erzielung einer vollständigen Imprägnierung bei einer niedrigen Anfangstemperatur verpresst werden, und durch anschließende Erhöhung unter Aufrechterhaltung des Drucks die Aushärtung begonnen und abgeschlossen werden.

Der erfindungsgemäße bevorzugte Druck beim Verpressen ist unabhängig von der Art des gewählten härtbaren Harzes (B) und/oder zur Aushärtung vorgesehenen Temperatur im Bereich von 1,0-10,0 MPa, vorzugsweise 1,5-7.0 MPa, weiter bevorzugt 2,0-5,0 MPa. Die Temperatur zum Aushärten des Harzes (B) ist in Abhängigkeit von der Art des verwendeten Harzes auszuwählen, und liegt vorzugsweise im Bereich von 110-220°C, weiter bevorzugt 120-200°C, noch weiter bevorzugt 130-180°C.

Durch geeignete Wahl der Verpressbedingungen innerhalb der oben beschriebenen Bereiche kann die Imprägnierung und Aushärtung im Allgemeinen in einem Zeitraum von 5 Sekunden bis 120 Minuten, vorzugweise 10 Sekunden bis 90 Minuten, weiter bevorzugt 20 Sekunden bis 60 Minuten, durchgeführt werden.

Erfindungsgemäß ist es ebenso möglich, die Imprägnierung der einzelnen Lagen des erfindungsgemäßen Verbundmaterials durch Verpressen zu Imprägnieren, und die Aushärtung anschließend unter verringertem Verpressdruck durchzuführen. Die hierbei anzuwendenden Temperaturen liegen im gleichen Bereich wie oben beschrieben.

Dem Fachmann ist es ohne weiteres geläufig, dass erfindungsgemäß unterschiedliche Laminier- und Verpresstechniken und -Vorrichtungen eingesetzt werden können, und bei diesen jeweils unterschiedliche Bedingungen zur Anwendung gelangen. Daher lassen sich keine engen bevorzugten Verpressbedingungen angeben. Die für unterschiedliche Verfahren und/oder Vorrichtungen geltenden Bedingungen sind dem Fachmann jedoch bekannt und sind für den vorliegenden Zweck im Rahmen des allgemeinen Fachwissens ohne weiteres zu ermitteln. Für einige Verfahren/Vorrichtungen lassen sich jedoch für die wesentlichen Verfahrensparameter Druck, Temperatur und Verpressdauer folgende bevorzugte Bereiche angeben:
Laminierung in Etagenpressen: 1,0-10,0 MPa, 120-160°C, 10-90 Minuten abhängig von der Etagenbelegung, Rückkühlung auf 70°C unter Druck.
Laminierung in Contipressen: 1,0-7,0 MPa, 150-210°C, 10-60 Sekunden, Rückkühlung auf 50-160°C unter Druck optional.
Laminierung in Kurztaktpressen HPL: 3,0-10,0 MPa, 140-180°C, 20-240 Sekunden, Belegung 1 oder 2 HPL/Pressgang.
Laminierung in Kurztaktpressen mittels Direktbeschichtung: 1,0-5,0 MPa, 140-220°C, 5-60 Sekunden, (Verpressung einzelner Platten)

### BEISPIELE

Die in den Beispielen und Vergleichsbeispielen erhaltenen Produkte wurden bezüglich ihrer thermischen und mechanischen Delaminierungsstabilität und Feuchtebeständigkeit getestet. Die Proben wurde dabei vor der Evaluierung den folgenden Bedingungen ausgesetzt:
- Test 1:: Erhitzen mit einem IR-Stahler ((Test gemäß DIN-EN 438) auf eine bestimmte Temperatur X, mindestens jedoch 180°C, und weiteres Erwärmen für einen bestimmten Zeitraum Y ab Erreichen der Temperatur X.
- Test 2:: Lagerung in einem vorgeheizten, auf 180°C eingestellten Trockenschrank für 20 Minuten, gemäß DIN-EN 438.
- Test 3:: Koch-/Wasserdampftest gemäß DIN-EN 438.

### Beispiel 1

Ein Overlay-Papier (Flächengewicht 70g/m², Saughöhe längs nach DIN ISO 8787-1: 56,0 mm/10 min., pH-Wert 6,30) ohne Farbempfangsschicht wurde mit einer UV härtenden Ink-Jet Tinte (*Rho Roll Ink*) bedruckt und gehärtet. Die Flächendeckung des Druckes betrug 70-90%. Es wurde ein konturscharfes Bild mit ausreichender Farbsättigung erhalten.

Das bedruckte Papier wurde mit einer Melaminharz-Imprägnierlösung (I) der unten angegebenen Zusammensetzung imprägniert und getrocknet. Das erhaltene Imprägnat (1-1) wies einen Melaminharzauftrag von 90 % atro Papier und eine Restfeuchte nach Trocknung von 6,7 % auf.

**Imprägnierlösung (I):**

| | | |
|---|---|---|
| Melaminharz: | *Kauramin*^{®} *753* | 54 % |
| Netzmittel: | *Alton*^{®} *959* | 0,7 % |
| Trennmittel: | *Alton*^{®} *856* | 0,4 % |
| Härter | | 0,35 % |
| Wasser | | ad. 100 % |

Als Härter wurde eine 65 %-ige wässrige Lösung des Morpholinsalzes der p-Toluolsulfonsäure verwendet. Der pH-Wert der gebrauchsfertigen Imprägnierlösung betrug 7,8 Mit der gleichen Imprägnierlösung (I) wurde ein unbedrucktes Overlay-Papier (Flächengewicht 28 g/m²) imprägniert und getrocknet. Das erhaltene Imprägnat (2) wies einen Melaminharzauftrag von 320 % atro Papier und eine Restfeuchte nach Trocknung von 4,8 % auf.

Ebenso wurde mit der Imprägnierlösung (I) ein weißes Uni-Dekorpapier (Flächengewicht 80 g/m²) imprägniert und getrocknet. Das erhaltene Imprägnat (3) wies einen Melaminharzauftrag von 90 % atro Papier und eine Restfeuchte nach Trocknung von 6,4 % auf.

Ferner wurde ein Natronkraftpapier (Papiergewicht 160 g/m²) mit einer handelsüblichen Phenolharzlösung (Harzgehalt 63%) für dekorative Schichtpressstoffe (*Prefer*^{®} *70 5573 L,* Dynea Erkner GmbH, DE-15537 Erkner) imprägniert und getrocknet. Das erhaltene Imprägnat (4) wies einen Phenolharzauftrag von 45 % atro Papier und eine Restfeuchte nach Trocknung von 5,8 % auf.

Drei Lagen Imprägnat (4) und je eine Lage der Imprägnate (3), (1-1) und (2) wurden in dieser Reihenfolge übereinandergelegt und unter einem Druck von 10 N/mm² und bei einer Temperatur von 140°C für 20 Minuten miteinander verpresst. Dann wurde unter gleichem Druck auf 70°C abgekühlt.

### Beispiel 2

Ein Overlay-Papier (Flächengewicht 40g/m², Saughöhe längs nach DIN ISO 8787-1: 78,0 mm/10 min., pH-Wert 6,10) ohne Farbempfangsschicht wurde wie in Beispiel 1 mit UV-härtender Ink-Jet Tinte bedruckt (Flächendeckung des Druckes 70-80%), gehärtet und dann mit der Imprägnierlösung (I) imprägniert und getrocknet. Das erhaltene Imprägnat (1-2) wies einen Melaminharzauftrag von 90 % atro Papier und eine Restfeuchte nach Trocknung von 6,7 % auf.

Dann wurde in der gleichen Weise wie in Beispiel 1 ein verpresstes Produkt hergestellt.

### Beispiel 3

In der gleichen Weise wie in Beispiel 1 wurde ein verpresstes Produkt hergestellt, mit dem Unterschied, dass das bedruckte und gehärtete Overlay-Papier nicht mit der Melaminharz-Imprägnierlösung (I) imprägniert wurde.

### Tests und Ergebnisse

Die in den Beispielen 1 bis 3 erhaltenen Produkte wurde wie oben beschrieben getestet. Die Ergebnisse waren wie folgt:
- Test 1:: (X = 190°C, Y = 10 sec): keine Delaminierung.
- Test 2:: keine Delaminierung.
- Test 3:: keine Blasenbildung nach Wasserdampftest und Kochtest (d.h. gute Feuchtebeständigkeit).

Ferner zeigte sich nach Besäumen der Produkte mittels Kreissäge keine Abplatzungen an den Schnittkanten, und im Biegeversuchen gemäß DIN EN ISO 178 erfolgte der Bruch der Produkte ohne abplatzen der Dekorschicht. Die Produkte zeigten also gute thermische und mechanische Delaminierungsstabilität und Feuchtebeständigkeit.

### Vergleichsbeispiel 4

Ein kommerziell erhältliches Digitaldruckpapier mit Farbempangsschicht (*Technocell*^{®} *MPK 9653;* Flächengewicht 100g/m², Aschegehalt ca. 40 %; pH-Wert 6,10) wurde mit UVhärtender Ink-Jet Tinte (*Rho Roll Ink*) bedruckt. Die Flächendeckung des Druckes betrug 70-80 %. Die Tinte wurde mittels UV Strahlung gehärtet. Es wurde ein konturscharfes Bild mit ausreichender Farbsättigung erhalten.

Das bedruckte Papier wurde mit der Melaminharz-Imprägnierlösung aus Beispiel 1 imprägniert und getrocknet. Das erhaltene Imprägnat (1-4) wies einen Melaminharzauftrag von 80 % atro Papier und eine Restfeuchte nach Trocknung von 6,4 % auf.

Drei Lagen Imprägnat (4) aus Beispiel 1, eine Lage Imprägnat (1-4) und eine Lage Imprägnat (2) aus Beispiel 1 wurden in dieser Reihenfolge übereinandergelegt und wie in Beispiel beschrieben verpresst.

Das erhaltene Produkt wurde wie oben beschrieben getestet. Die Ergebnisse waren wie folgt:
- Test 1:: Das Produkt delaminierte bereits bei Erreichen einer Oberflächentemperatur von 150°C.
- Test 3:: Blasenbildung nach Wasserdampftest (d.h. mangelhafte Feuchtebeständigkeit).

### Vergleichsbeispiel 5

Eine Druckbasispapier (Flächengewicht 72 g/m², Aschegehalt 38 %; pH-Wert 6,3) wurde mit durch Beschichten mit einer selbstvernetzenden Acrylatdispersion (*Plextol*^{®} *B V 595*) mit einer Farbempfangsschicht versehen. Das erhaltene Papier wies einen Trockenauftrag an Farbempfangsschicht von 10 g/m² und eine Restfeuchte von 5,6 % auf.

Das Papier wurde mit UV härtender Ink-Jet Tinte bedruckt. Die Flächendeckung des Druckes betrug 70-80 %. Die Tinte wurde mittels UV Strahlung gehärtet. Es wurde ein konturscharfes Bild mit ausreichender Farbsättigung erhalten.

Das bedruckte Papier wurde mit der Melaminharz-Imprägnierlösung aus Beispiel 1 imprägniert und getrocknet. Dabei war es erforderlich, die beschichtete und bedruckte Seite des Papiers als Unterseite durch das Harzbad zu führen, um eine ausreichende Harzaufnahme und ein Entweichen eingeschlossener Luft zu erreichen. Das erhaltene Imprägnat (1-5) wies einen Melaminharzauftrag von 80 % atro Papier und eine Restfeuchte nach Trocknung von 6,2 % auf.

In der gleichen Weise wie Vergleichsbeispiel 4 wurde das Imprägnat (1-5) mit den Imprägnaten (2) und (3) aus Beispiel 1 übereinandergelegt und verpresst.

Das erhaltene Produkt wurde wie oben beschrieben getestet. Die Ergebnisse waren wie folgt:
- Test 1:: (X = 180°C, Y = 3 sec): beginnende Delaminierung.
- Test 2:: beginnende Delaminierung.
- Test 3:: Blasenbildung nach Wasserdampftest (d.h. mangelhafte Feuchtebeständigkeit).

Ferner löste sich Das Overlay (Imprägnat (2)) bereits bei Auftreten von leichter Biegespannung und nach Besäumen an den Schnittkanten vom bedruckten Untergrund. An unbedruckten Stellen war der Verbund deutlich besser, aber ebenfalls nicht ausreichend.

### Vergleichsbeispiel 6

Das Druckbasispapier aus Vergleichsbeispiel 5 wurde ohne Farbempfangsschicht mit UV härtender Ink-Jet Tinte bedruckt.

Die Tinte wurde von der Papierbahn aufgesaugt. Es konnte kein konturscharfes Bild mit ausreichender Farbsättigung erhalten werden. Die Tinte konnte nicht mittels UV Strahlung gehärtet werden, da wesentliche Anteile der Tinte im Lichtschatten der Pigmente des Druckbasispapiers lagen.

### Vergleichsbeispiel 7

In der gleichen Weise wie Vergleichsbeispiel 4 wurde ein verpresstes Produkt hergestellt, mit dem Unterschied, dass das Digitaldruckpapier mit einer wässrigen Tinte (*LongLife Ink,* DicoJET GmbH, DE-63654 Büdingen) anstelle der im Vergleichsbeispiel 1 verwendeten UV härtenden Ink-Jet Tinte bedruckt wurde.

Das erhaltene Produkt wurde wie oben beschrieben getestet. Die Ergebnisse waren wie folgt:
- Test 1:: (190°C, 10 sec): keine Delaminierung.
- Test 2:: keine Delaminierung.
- Test 3:: keine Blasenbildung nach Wasserdampftest und Kochtest (d.h. gute Feuchtebeständigkeit).

Ferner zeigte sich nach Besäumen des Produkts mittels Kreissäge keine Abplatzungen an den Schnittkanten, und im Biegeversuchen gemäß DIN EN ISO 178 erfolgte der Bruch des Produkts ohne abplatzen der Dekorschicht. Die Produkte zeigten also gute thermische und mechanische Delaminierungsstabilität und Feuchtebeständigkeit.

Vergleichsbeispiel 7 zeigt, dass für die Delaminierung und unzureichende Feuchtebeständigkeit der verpressten Produkte die Kombination aus UV-härtbarer Tinte und der dafür erforderlichen Farbempfangsschicht auf dem Druckbasispapier in wesentlichem Maße mit ursächlich sind.

### Vergleichsbeispiel 8

Es wurde wie in Beispiel 1 ein mit Melaminharz imprägniertes Overlay-Papier hergestellt, mit dem Unterschied, dass es einen Melaminharzauftrag von 380 % atro Papier aufwies (Imprägnat 2-8). Das bedruckte und gehärtete Digitaldruckpapier aus Vergleichsbeispiel 4 wurde ohne Imprägnierung mit Melaminharz zwischen zwei Lagen des Imprägnats 2-8 verpresst (Heizen von Raumtemperatur auf 150°C in 5 min., aufrechterhalten dieser Temperatur für 15 min. und Abkühlen auf 60°C in 10 min., bei einem Druck von 10 N/mm²).

Das erhaltene verpresste Zwischenprodukt wurde auf drei Lagen Imprägnat (4) aus Beispiel 1 gelegt und wie in Beispiel 1 beschrieben verpresst.

Das erhaltene Produkt wurde wie oben beschrieben getestet. Die Ergebnisse waren wie folgt:
- Test 1:: Das Produkt delaminierte bereits bei Erreichen einer Oberflächentemperatur von 80°C.
- Test 3:: Blasenbildung nach Wasserdampftest und Kochtest (d.h. mangelhafte Feuchtebeständigkeit).

Ferner platzte das Deckoverlay im Biegeversuch gemäß DIN EN ISO 178 von der Druckfarbe ab. Das Produkt zeigte also schlechte mechanische Delaminierungsstabilität.

## Patentansprüche

1. Verfahren zur Herstellung eines Verbundmaterials oder eines Vorprodukts davon, das folgende Schritte umfasst:
(i) Bedrucken eines Trägermaterials (A1) mit einer durch Bestrahlung mit Licht härtbaren Tinte (D), wobei das Trägermaterial (A1)
(a) mit einem härtbaren, nach dem Härten transparenten und lichtstabilen Harz (B) imprägnierbar ist, und
(b) für Licht im Wellenlängenbereich von 200-500 nm eine auf die Gesamtdicke bezogene Durchlässigkeit von 10-95 %, vorzugsweise 20-90 %, weiter bevorzugt 30-80 % aufweist;
(ii) Härten der Tinte (D) durch Bestrahlung mit Licht;
(iii) Imprägnieren des so behandelten Trägermaterials (A1) mit einem härtbaren, nach dem Härten transparenten und lichtstabilen Harz (B) und gegebenenfalls Kombinieren des Trägermaterials (A1) mit mindestens einem weiteren Trägermaterial (A2); und
(iv) Härten des Harzes (B) gleichzeitig mit oder nach Schritt (iii).

2. Verfahren gemäß Anspruch 1, worin die Tinte (D) eine Tinte ist, die durch Bestrahlung mit UV-Licht im Wellenlängenbereich von 200-500 nm, vorzugsweise 240-420 nm, weiter bevorzugt 250-350 nm, härtbar ist.

3. Verfahren gemäß Anspruch 1 oder 2, worin Trägermaterial (A1) ausgewählt ist aus
- Papier, vorzugsweise Papier, das keine Füllstoffe oder nur solche Füllstoffe enthält, die für Licht im Wellenlängenbereich von 200-500 nm, vorzugsweise von 240-420 nm, weiter bevorzugt 250-350 nm, durchlässig sind, und
- Vliesen, vorzugsweise Glasfaservliesen, und insbesondere Vliesen aus Borsilikatglas.

4. Verfahren gemäß Anspruch 3, worin das Trägermaterial (A1) ein Papier ist, das mindestens 50 Gew.-% Cellulosefasern umfasst, vorzugsweise mindestens 70 Gew.-%, und weiter bevorzugt mindestens 90 Gew.-%.

5. Verfahren gemäß Anspruch 3 oder 4, worin das Trägermaterial (A1) ein Papier ist, das ein Flächengewicht von 10-200 g/m² aufweist, vorzugsweise 15-130 g/m², und weiter bevorzugt 20-100 g/m².

6. Verfahren gemäß mindestens einem der Ansprüche 1-5, worin die UV-härtende Tinte ausgewählt ist aus Tinten auf Acrylatbasis, Tinten auf Polyesterbasis, Tinten auf Epoxidbasis und Tinten auf Epoxyacrylatbasis.

7. Verfahren gemäß mindestens einem der Ansprüche 1-6, worin das härtbare Harz (B) ausgewählt ist aus Aminoplastharzen, insbesondere Melaminharzen; Melaminetherharzen; Harnstoffharzen, Acrylatdispersionen und Polyuretandispersionen, Epoxidharzdispersionen, wasserlöslichen Tränkharzen, und Mischungen daraus.

8. Verfahren gemäß mindestens einem der Ansprüche 1-7, worin Schritt (iii) durchgeführt wird durch
(iii-a) direktes Imprägnieren des Trägermaterials (A1) mit einem härtbaren Harz (B) und/oder
(iii-b) Übereinanderlegen des Trägermaterials (A1) mit einem weiteren Trägermaterial (A2), das mit einem härtbaren Harz (B) imprägniert und vorgetrocknet ist, auf mindestens einer Seite des Trägermaterials (A1) und Verpressen des resultierenden Komposits.

9. Verfahren gemäß Anspruch 8, worin das mindestens eine Trägermaterial (A2) ausgewählt ist aus Overlaypapieren, Natronkraftpapieren, Dekorpapieren, Vliesen auf Basis von Kunst- oder Naturfasern, Dämmstoffplatten, Span- oder Pressholzplatten, Glasfasermaterialien und Mischprodukten aus diesen Materialien.

10. Verfahren gemäß Anspruch 9, worin das das mindestens eine Trägermaterial (A2) ein Overlaypapier mit einem Flächengewicht von 10-200 g/m² ist.

11. Verfahren gemäß mindestens einem der Ansprüche 8-10, das zumindest den Schritt (iii-b) umfasst, und worin Schritt (iv) durchgeführt wird durch Verpressen bei einem Druck von 1.000-10.000 kPa und einer Temperatur von 110-220°C.

12. Verfahren gemäß Anspruch 11, worin Schritt (iv) durchgeführt wird durch Verpressen unter einem Druck von 1.000-10.000 kPa, vorzugsweise 1.500-7.000 kPa, weiter bevorzugt 2.000-5.000 kPa.

13. Verfahren gemäß Anspruch 11 oder 12, worin Schritt (iv) durchgeführt wird durch Verpressen bei einer Temperatur von 120-200°C, weiter bevorzugt 130-180°C.

14. Verfahren gemäß mindestens einem der Ansprüche 11-13, worin Schritt (iv) durchgeführt wird durch Verpressen für einen Zeitraum von 5 Sekunden bis 120 Minuten, vorzugsweise 10 Sekunden bis 90 Minuten, weiter bevorzugt 20 Sekunden bis 60 Minuten.

15. Verfahren gemäß mindestens einem der Ansprüche 1-14, worin das Trägermaterial (A1) mit Harz in einer Menge von 20-500 Gew.-%, vorzugsweise 30-400 Gew.-%, weiter bevorzugt 40-350 Gew.-%, bezogen auf das Flächengewicht des Trägermaterial (A1), imprägniert wird.

16. Verbundmaterial oder Vorprodukt davon, beinhaltend ein Trägermaterial, das (b) für Licht im Wellenlängenbereich von 200-500 nm eine auf die Gesamtdicke bezogene Durchlässigkeit von 10-95 %, vorzugsweise 20-90 %, weiter bevorzugt 30-80 % aufweist, erhältlich nach einem Verfahren, das folgende Schritte umfasst:
(i) Bedrucken des Trägermaterials (A1) mit einer durch Bestrahlung mit Licht härtbaren Tinte (D), wobei das Trägermaterial (A1)
(a) mit einem härtbaren, nach dem Härten transparenten und lichtstabilen Harz (B) imprägnierbar ist,
(ii) Härten der Tinte (D) durch Bestrahlung mit Licht;
(iii) Imprägnieren des so behandelten Trägermaterials (A1) mit einem härtbaren, nach dem Härten transparenten und lichtstabilen Harz (B) und gegebenenfalls Kombinieren des Trägermaterials (A1) mit mindestens einem weiteren Trägermaterial (A2); und
(iv) Härten des Harzes (B) gleichzeitig mit oder nach Schritt (iii).

17. Verbundmaterial gemäß Anspruch 16, das erhältlich ist nach einen Verfahren gemäß mindestens einem der Ansprüche 2-15.

## Claims

1. Process which comprises the following steps for the production of a composite material or of a precursor thereof:
(i) printing of a supportive material (A1) with an ink (D) curable by irradiation with light, where the supportive material (A1)
(a) can be impregnated with a curable resin (B) which, after curing, is transparent, and is stable when exposed to light, and
(b) has from 10 to 95% permeability, based on the total thickness, for light in the wavelength range from 200 to 500 nm, preferably from 20 to 90%, more preferably from 30 to 80%;
(ii) curing of the ink (D) by irradiation with light;
(iii) impregnation of the resultant supportive material (A1) with a curable resin (B) which, after curing, is transparent and is stable when exposed to light, and optionally combination of the supportive material (A1) with at least one other supportive material (A2); and
(iv) curing of the resin (B) simultaneously with or after step (iii).

2. Process according to Claim 1, in which the ink (D) is an ink which is curable by irradiation with UV light in the wavelength range from 200 to 500 nm, preferably from 240 to 420 nm, more preferably from 250 to 350 nm.

3. Process according to Claim 1 or 2, in which supportive material (A1) is selected from
- paper, preferably paper comprising no fillers or comprising only fillers permeable to light in the wavelength range from 200 to 500 nm, preferably from 240 to 420 nm, more preferably from 250 to 350 nm, and
- non-woven fabrics, preferably glass-fibre non-woven fabrics, and in particular non-woven fabrics made of borosilicate glass.

4. Process according to Claim 3, in which the supportive material (A1) is a paper which comprises at least 50% by weight of cellulose fibres, preferably at least 70% by weight, and more preferably at least 90% by weight.

5. Process according to Claim 3 or 4, in which the supportive material (A1) is a paper of which the weight per unit area is from 10 to 200 g/m², preferably from 15 to 130 g/m², and more preferably from 20 to 100 g/m².

6. Process according to at least one of Claims 1 to 5, in which the UV-curing ink is selected from acrylate-based inks, polyester-based inks, epoxy-based inks and epoxy-acrylate-based inks.

7. Process according to at least one of Claims 1 to 6, in which the curable resin (B) is selected from aminoplastic resins, in particular melamine resins; melamine-ether resins; urea resins, acrylate dispersions and polyurethane dispersions, epoxy-resin dispersions, water-soluble impregnation resins, and mixtures thereof.

8. Process according to at least one of Claims 1 to 7, in which step (iii) is carried out via
(iii-a) direct impregnation of the supportive material (A1) with a curable resin (B) and/or
(iii-b) on at least one side of the supportive material (A1), mutual superposition of the supportive material (A1) with another supportive material (A2) which has been impregnated with a curable resin (B) and predried, and pressing of the resultant composite.

9. Process according to Claim 8, in which the at least one supportive material (A2) is selected from overlay papers, soda kraft papers, decorative papers, non-woven fabrics based on synthetic fibres or on natural fibres, insulating sheets, chipboard or fibreboard, glass-fibre materials and mixed products made of these materials.

10. Process according to Claim 9, in which the at least one supportive material (A2) is an overlay paper with weight per unit area from 10 to 200 g/m².

11. Process according to at least one of Claims 8 to 10 which comprises at least the step (iii-b), and in which step (iv) is carried out via pressing at a pressure of from 1000 to 10 000 kPa and at a temperature of from 110 to 220°C.

12. Process according to Claim 11, in which step (iv) is carried out via pressing under a pressure of from 1000 to 10 000 kPa, preferably from 1500 to 7000 kPa, more preferably from 2000 to 5000 kPa.

13. Process according to Claim 11 or 12, in which step (iv) is carried out via pressing at a temperature of from 120 to 200°C, more preferably from 130 to 180°C.

14. Process according to at least one of Claims 11 to 13, in which step (iv) is carried out via pressing for a period of from 5 seconds to 120 minutes, preferably from 10 seconds to 90 minutes, more preferably from 20 seconds to 60 minutes.

15. Process according to at least one of Claims 1 to 14, in which the supportive material (A1) is is impregnated with a quantity of from 20 to 500% by weight of resin, preferably from 30 to 400% by weight, more preferably from 40 to 350% by weight, based on the weight per unit area of the supportive material (A1).

16. Composite material or precursor thereof, including a supportive material which has from 10 to 95% permeability, based on the total thickness, for light in the wavelength range from 200 to 500 nm, preferably from 20 to 90%, more preferably from 30 to 80%, obtainable by a process comprising the following steps:
(i) printing of the supportive material (A1) with an ink (D) curable by irradiation with light, where the supportive material (A1) (a) can be impregnated with a curable resin (B) which, after curing, is transparent, and is stable when exposed to light,
(ii) curing of the ink (D) by irradiation with light;
(iii) impregnation of the resultant supportive material (A1) with a curable resin (B) which, after curing, is transparent and is stable when exposed to light, and optionally combination of the supportive material (A1) with at least one other supportive material (A2); and
(iv) curing of the resin (B) simultaneously with or after step (iii).

17. Composite material according to Claim 16, obtainable by a process according to at least one of Claims 2 to 15.

## Revendications

1. Procédé de fabrication d'un matériau composite ou d'un produit préliminaire de celui-ci, qui comprend les étapes suivantes :
(i) l'impression d'un matériau support (A1) avec une encre (D) durcissable par exposition à la lumière, le matériau support (A1)
(a) étant imprégnable avec une résine (B) durcissable, transparente après le durcissement et stable à la lumière, et
(b) présentant une perméabilité à la lumière dans la plage de longueurs d'onde allant de 200 à 500 nm, relative à l'épaisseur totale, de 10 à 95 %, de préférence de 20 à 90 %, de manière davantage préférée de 30 à 80 % ;
(ii) le durcissement de l'encre (D) par exposition à de la lumière ;
(iii) l'imprégnation du matériau support (A1) ainsi traité avec une résine (B) durcissable, transparente après le durcissement et stable à la lumière, et éventuellement la combinaison du matériau support (A1) avec au moins un autre matériau support (A2) ; et
(iv) le durcissement de la résine (B) simultanément à ou après l'étape (iii).

2. Procédé selon la revendication 1, dans lequel l'encre (D) est une encre qui est durcissable par exposition à la lumière UV dans la plage de longueurs d'onde allant de 200 à 500 nm, de préférence de 240 à 420 nm, de manière davantage préférée de 250 à 350 nm.

3. Procédé selon la revendication 1 ou 2, dans lequel le matériau support (A1) est choisi parmi :
- le papier, de préférence un papier qui ne contient pas de charges ou uniquement des charges perméables à la lumière dans la plage de longueurs d'onde allant de 200 à 500 nm, de préférence de 240 à 420 nm, de manière davantage préférée de 250 à 350 nm, et
- les non-tissés, de préférence les non-tissés de fibres de verre, et notamment les non-tissés de verre de borosilicate.

4. Procédé selon la revendication 3, dans lequel le matériau support (A1) est un papier qui comprend au moins 50 % en poids de fibres de cellulose, de préférence au moins 70 % en poids et de manière davantage préférée au moins 90 % en poids.

5. Procédé selon la revendication 3 ou 4, dans lequel le matériau support (A1) est un papier qui présente un poids superficiel de 10 à 200 g/m², de préférence de 15 à 130 g/m² et de manière davantage préférée de 20 à 100 g/m².

6. Procédé selon au moins l'une quelconque des revendications 1 à 5, dans lequel l'encre durcissant par UV est choisie parmi les encres à base d'acrylate, les encres à base de polyester, les encres à base d'épcxyde et les encres à base d'époxyacrylate.

7. Procédé selon au moins l'une quelconque des revendications 1 à 6, dans lequel la résine durcissable (B) est choisie parmi les résines aminoplastes, notamment les résines de mélanine ; les résines d'éther de mélamine ; les résines d'urée, les dispersions d'acrylate et les dispersions de polyuréthane, les dispersions de résine époxyde, les résines à imprégner solubles dans l'eau, et leurs mélanges.

8. Procédé selon au moins l'une quelconque des revendications 1 à 7, dans lequel l'étape (iii) est réalisée par
(iii-a) imprégnation directe du matériau support (A1) avec une résine durcissable (B) et/ou
(iii-b) superposition du matériau support (A1) avec un autre matériau support (A2), qui est imprégné avec une résine durcissable (B) et préséché, sur au moins un côté du matériau support (A1), et compression du composite résultant.

9. Procédé selon la revendication 8, dans lequel ledit au moins un matériau support (A2) est choisi parmi les overlay, les papiers kraft à la soude, les papiers décoratifs, les non-tissés à base de fibres artificielles ou naturelles, les panneaux de matériau isolant, les panneaux de particules ou de bois comprimé, les matériaux à base de fibres de verre et les produits mélangés de ces matériaux.

10. Procédé selon la revendication 9, dans lequel ledit au moins un matériau support (A2) est un overlay ayant un poids superficiel de 10 à 200 g/m².

11. Procédé selon au moins l'une quelconque des revendications 8 à 10, qui comprend au moins l'étape (iii-b), et dans lequel l'étape (iv) est réalisée par compression à une pression de 1 000 à 10 000 kPa et une température de 110 à 220 °C.

12. Procédé selon la revendication 11, dans lequel l'étape (iv) est réalisée par compression à une pression de 1 000 à 10 000 kPa, de préférence de 1 500 à 7 000 kPa, de manière davantage préférée de 2 000 à 5 000 kPa.

13. Procédé selon la revendication 11 ou 12, dans lequel l'étape (iv) est réalisée par compression à une température de 120 à 200°C, de manière davantage préférée de 130 à 180 °C.

14. Procédé selon au moins l'une quelconque des revendications 11 à 13, dans lequel l'étape (iv) est réalisée par compression pendant une durée de 5 secondes à 120 minutes, de préférence de 10 secondes à 90 minutes, de manière davantage préférée de 20 secondes à 60 minutes.

15. Procédé selon au moins l'une quelconque des revendications 1 à 14, dans lequel le matériau support (A1) est imprégné avec une résine en une quantité de 20 à 500 % en poids, de préférence de 30 à 400 % en poids, de manière davantage préférée de 40 à 350 % en poids, par rapport au poids superficiel du matériau support (A1).

16. Matériau composite ou produit préliminaire de celui-ci, contenant un matériau support qui présente une perméabilité à la lumière dans la plage de longueurs d'onde allant de 200 à 500 nm, relative à l'épaisseur totale, de 10 à 95 %, de préférence de 20 à 90 %, de manière davantage préférée de 30 à 80 %, pouvant être obtenu par un procédé qui comprend les étapes suivantes :
(i) l'impression du matériau support (A1) avec une encre (D) durcissable par exposition à la lumière, le matériau support (A1)
(a) étant imprégnable avec une résine (B) durcissable, transparente après le durcissement et stable à la lumière,
(ii) le durcissement de l'encre (D) par exposition à de la lumière ;
(iii) l'imprégnation du matériau support (A1) ainsi traité avec une résine (B) durcissable, transparente après le durcissement et stable à la lumière, et éventuellement la combinaison du matériau support (A1) avec au moins un autre matériau support (A2) ; et
(iv) le durcissement de la résine (B) simultanément à ou après l'étape (iii).

17. Matériau composite selon la revendication 16, qui peut être obtenu par un procédé selon au moins l'une quelconque des revendications 2 à 15.
